# EUROPÄISCHE PATENTSCHRIFT

(11) **EP 2 589 936 B1**
(45) Veröffentlichungstag und Bekanntmachung des Hinweises auf die Patenterteilung: **08.08.2018**
(21) Anmeldenummer: 12190712.5
(22) Anmeldetag: 31.10.2012
(51) Int. Cl.: G01F 1/00, G01F 1/708

(54) **Verfahren zur Erfassung des Volumenstroms einer in einem Gerinne fließenden Flüssigkeit sowie Vorrichtung zur Durchführung desselben**
Method for measuring the volume flow of a liquid flowing in a channel, and device for carrying out the same
Procédé de détermination du débit volumétrique d'un liquide s'écoulant dans une rigole ainsi que le dispositif permettant son exécution

(30) Priorität: 03.11.2011 DE 102011055007
(43) Veröffentlichungstag der Anmeldung: 08.05.2013
(73) Patentinhaber: SEBA Hydrometrie GmbH & Co. KG, 87600 Kaufbeuren (DE)
(72) Erfinder: Müller, Karsten, 52056 Aachen (DE); Desorno, Thomas Martin, 52056 Aachen (DE)
(74) Vertreter: Grundmann, Dirk

(56) Entgegenhaltungen:
- EP-A2- 2 034 278
- DE-A1- 4 200 309

## Beschreibung

Die Erfindung betrifft ein Verfahren zur Erfassung des Volumenstroms einer in einem Gerinne fließenden Flüssigkeit, wobei zur Bestimmung einer Fließgeschwindigkeit der Flüssigkeit in definierten Zeitabständen Abbildungen der Oberfläche der fließenden Flüssigkeit gemacht werden und daraus der Versatz an der Oberfläche der Flüssigkeit schwimmender Strukturen bestimmt wird, und zur Bestimmung der Querschnittsfläche der Flüssigkeit die Vertikalposition der Oberfläche der Flüssigkeit ebenfalls durch Auswerten einer Abbildung bestimmt wird. Die Erfindung betrifft darüber hinaus eine Vorrichtung zur Durchführung des Verfahrens.

Es besteht der Bedarf, in Abwasserkanälen, die die Form einer nach oben offenen Umschließung besitzen, die Durchflussmenge des Abwassers zu bestimmen. Die EP 1 540 288 B1 beschreibt ein Verfahren zur Erfassung eines solchen Volumenstroms in einem derartigen Gerinne. Die Fließgeschwindigkeit wird optisch dadurch ermittelt, dass in definiertem Zeitabstand Fotos von der Oberfläche der fließenden Flüssigkeit aufgenommen werden. Mittels eines bilderkennenden Verfahrens kann der Versatz auf der Oberfläche schwimmender Partikel oder anderweitiger Strukturen erkannt werden. Wird diesem Versatz eine definierte Strecke zugeordnet, lässt sich daraus die Fließgeschwindigkeit am Ort des Partikels ermitteln. Zur Bestimmung der Querschnittsfläche der Flüssigkeit wird eine weitere fotografische Aufnahme, diesmal des Querschnitts des Gerinnes aufgenommen. Aus dieser Aufnahme wird die vertikale Höhe des Flüssigkeitsspiegels ermittelt.
Die DE4200309 A1 offenbart eine Vorrichtung zur Ermittlung der Strömung eines Strömungsmediums mit zwei lichtoptisch arbeitenden Detektoren,

Der Erfindung liegt die Aufgabe zugrunde, das eingangs genannte Verfahren hinsichtlich des apparativen Aufbaues bzw. der Messmethode zu vereinfachen.

Gelöst wird die Aufgabe durch die in den Ansprüchen angegebene Erfindung.

Gelöst wird die Aufgabe dadurch, dass die Fließgeschwindigkeit und die Vertikalposition der Oberfläche durch Auswerten mehrerer gleichzeitig von verschiedenen Positionen aufgenommenen Abbildungen der Oberfläche bestimmt werden. Erfindungsgemäß werden mit mehreren optischen Abbildungseinrichtungen Abbildungen, die zumindest bereichsweise denselben Oberflächenabschnitt der Flüssigkeit betreffen, aufgenommen. Diese stereometrischen Abbildungen werden sodann von einer Steuer-Auswerteeinrichtung ausgewertet. Es ist von besonderem Vorteil, wenn mit Hilfe mehrerer, in definierten Zeitabständen aufgenommener Abbildungssätze eine lokale Oberflächen- Fließgeschwindigkeit der schwimmenden Struktur und deren vertikale Höhe bestimmt werden. Es können auch mehrere lokale Oberflächengeschwindigkeiten mehrerer Strukturen bestimmt werden. Aus diesen Daten lässt sich die Höhe des Flüssigkeitsspiegels über der Sohle des Gerinnes bestimmen. Die Querschnittskontur des Gerinnes, welches über eine hinreichende Länge einen gleichbleibenden Querschnitt aufweist, ist bekannt. Aus der bestimmten Flüssigkeitshöhe lässt sich die Querschnittsfläche ermitteln. Aus den ein oder mehreren lokalen Oberflächen-Fließgeschwindigkeiten lässt sich insbesondere mit Hilfe eines theoretisch oder experimentell ermittelten Strömungsmodells eine mittlere Fließgeschwindigkeit ermitteln. Diese braucht dann lediglich von einer Recheneinrichtung der Steuer-Auswerteeinrichtung mit dem Querschnitt der Flüssigkeit multipliziert werden. Die stereometrischen Abbildungssätze enthalten jeweils mindestens zwei, bevorzugt drei gleichzeitig aufgenommene Abbildungen eines Oberflächenabschnittes der Flüssigkeit. Unter Verwendung trigonometrischer Funktionen und einer digitalen Bilderkennung kann zu jedem Abbildungssatz ein dreidimensionaler Abstand der schwimmenden Struktur zu einem ortsfesten Referenzpunkt bestimmt werden. Aus diesem Abstandsvektor kann dann der horizontale Versatz der Struktur und die vertikale Höhe bestimmt werden. Die erfindungsgemäße Vorrichtung ist mit mindestens zwei, bevorzugt drei optischen Abbildungseinrichtungen ausgestattet. Es kann sich dabei um Digitalkameras handeln, die an voneinander verschiedenen, aber ortsfesten Positionen bspw. innerhalb eines Kanalschachtes befestigt sind. Die optischen Abbildungseinrichtungen können an einem Gestell befestigt sein, welches bspw. in einen Kanalschacht eingehängt werden kann. Gegebenenfalls ist eine Lichtquelle vorgesehen, um bei der Abbildung die Oberfläche der Flüssigkeit zu beleuchten. Die Vorrichtung besitzt eine Steuer-Auswerteeinrichtung, die in definierten Zeitabständen gleichzeitig alle optischen Abbildungseinrichtungen auslöst. Die optischen Abbildungseinrichtungen sind derart ausgerichtet, dass sie im Wesentlichen denselben Oberflächenabschnitt der Flüssigkeit abbilden. Die Steuer-Auswerteeinrichtung besitzt eine Recheneinrichtung, in der ein Bilderkennungsverfahren abläuft. Mit diesem Bilderkennungsverfahren können einzelne Schwimmstoffe, bspw. Partikel oder auch Blasen, anhand ihrer Form oder aber auch ihrer Position identifiziert werden. Unter Verwendung trigonometrischer Funktionen lässt sich dann ein dreidimensionaler Abstand, also ein Abstandsvektor der auf der Flüssigkeit schwimmenden Struktur zu einem ortsfesten Referenzpunkt bestimmen. Bei der Berechnung des Volumenstroms wird die bekannte Querschnittskontur des Gerinnes mitberücksichtigt. Aus dem Abstandsvektor kann der vertikale Abstand des Flüssigkeitsspiegels zur Sohle des Gerinnes berechnet werden. Aus mehreren zeitlich nacheinander erfassten Abbildungssätzen kann die Oberflächen- Fließgeschwindigkeit berechnet werden. Es handelt sich um jeweils eine lokale Oberflächen-Fließgeschwindigkeit. Die Flüssigkeit hat im Allgemeinen eine mit dem Abstand vom Rand des Gerinnes variierende Fließgeschwindigkeit. Mit der elektronischen Bilderkennung kann der Abstand der schwimmenden Struktur vom Boden und vom Rand des Gerinnes sowie deren lokale Oberflächen-Fließgeschwindigkeit ermittelt werden. Diese Fließgeschwindigkeit und die Abstände fließen in ein theoretisch oder experimentell ermitteltes Strömungsmodell ein. Aus ein oder mehreren lokalen Oberflächen-Strömungsgeschwindigkeiten kann mit Hilfe der Recheneinrichtung eine mittlere Strömungsgeschwindigkeit berechnet werden. Bei der Berechnung der mittleren Strömungsgeschwindigkeit wird somit neben der Höhe des Flüssigkeitsspiegels auch der laterale Ort der Struktur mit berücksichtigt. Durch Multiplikation dieser gemittelten Strömungsgeschwindigkeit mit der unter Verwendung der bekannten Kontur des Gerinnes ermittelten Querschnittsfläche der Flüssigkeit kann der Volumenstrom berechnet werden.

Ein Ausführungsbeispiel der Erfindung wird nachfolgend anhand beigefügter Zeichnungen erläutert. Es zeigen:
- Fig. 1: schematisch einen Längsschnitt durch eine in einem Gerinne 1 von links nach rechts fließende Flüssigkeit 2, oberhalb deren Oberfläche 3 an einem Gestell drei Abbildungseinrichtungen 5 angeordnet sind, mit denen ein Abbild eines auf der Oberfläche 3 schwimmenden Partikels 4, 4' erstellbar ist,
- Fig. 2: die Draufsicht in Richtung des Pfeiles II in Fig. 1,
- Fig. 3: den Querschnitt entlang der Schnittlinie III-III in Fig. 2 und
- Fig. 4: ein Blockschaltbild der wesentlichen Komponenten.

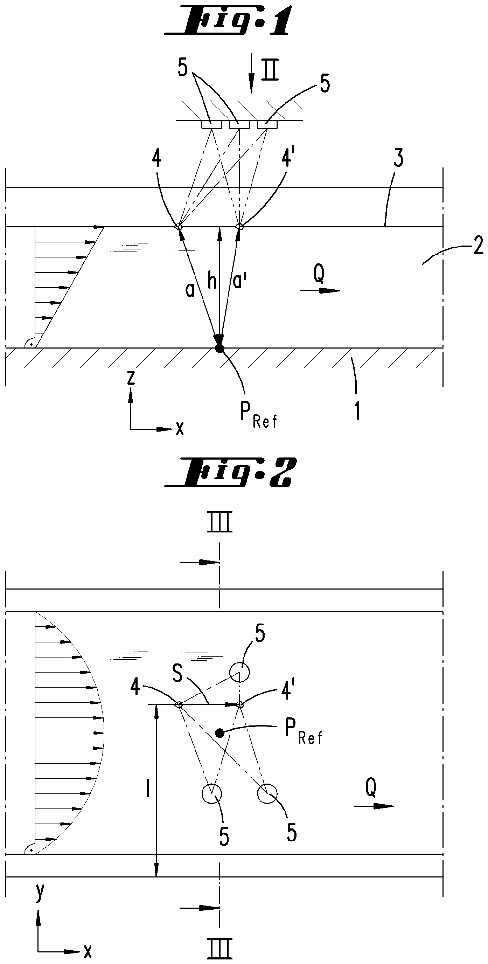

In den Figuren ist eine nach oben offene Rinne 1 dargestellt, in der bspw. ein Abwasser fließen kann. Dieses Gerinne 1 hat ein geringes Gefälle, so dass die Flüssigkeit 2 schwerkraftgetrieben durch das Gerinne 1 fließen kann. Die Querschnittskontur des Gerinnes 1 ist im Wesentlichen in Fließrichtung konstant und kann als bekannt vorausgesetzt werden. Die vertikale Geschwindigkeitsverteilung ist schematisch in der Fig. 1 und die horizontale Geschwindigkeit schematisch in der Fig. 1 jeweils mit Pfeilen dargestellt.

In einem Abstand oberhalb der Oberfläche 3 der Flüssigkeit 2 befindet ich ein nicht näher bezeichnetes Gestell, an welchem drei Digitalkameras 5 befestigt sind. Das Gestell ist so ausgebildet, dass es in einen Kanalschacht eingehängt werden kann, um im temporären Betrieb dort den Volumenstrom des Abwassers durch das Gerinne 1 zu messen. Die drei Digitalkameras 5 sind hinsichtlich ihrer optischen Achse auf einen entfernt liegenden Punkt ausgerichtet, so dass sie größtenteils übereinstimmende Abschnitte der Oberfläche 3 der Flüssigkeit abbilden.

Mit der Bezugsziffer 4 ist ein auf der Oberfläche 3 der Flüssigkeit 2 schwimmender Partikel 4 zu einem ersten Zeitpunkt dargestellt. Mit der Bezugsziffer 4' ist derselbe Partikel zu einem späteren Zeitpunkt dargestellt. Mit den drei Digitalkameras 5 werden in vorbestimmten Zeitabständen jeweils gleichzeitig stereometrische Abbildungen der Oberfläche 3 gemacht. Auf den zu einem ersten Zeitpunkt gemachten Abbildungen befindet sich bspw. der Partikel an der mit 4 bezeichneten Position. Zu einer späteren Zeit befindet sich der Partikel an der mit 4' bezeichneten Position.

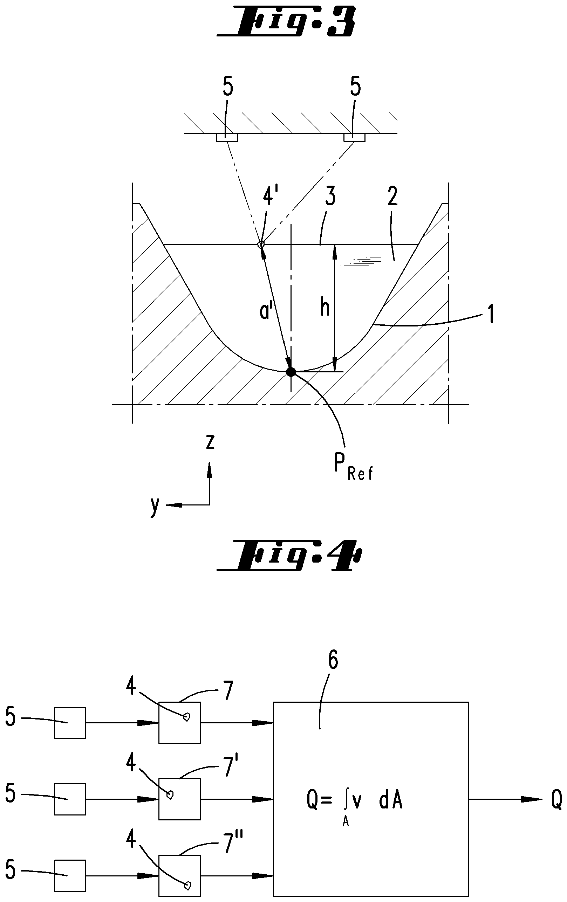

Aus der Fig. 4 geht hervor, dass die drei mit den verschiedenen Digitalkameras 5 gleichzeitig gemachten Abbildungen 7, 7', 7" den Partikel 4 an unterschiedlichen Positionen auf den Abbildungen 7, 7', 7" darstellen. Im einfachsten Fall verlaufen die optischen Achsen der Digitalkameras 5 parallel zueinander. Aus dem Versatz der Bildpunkte des Partikels 4 in den verschiedenen Abbildungen 7, 7', 7" kann unter Verwendung trigonometrischer Funktionen die Relativposition des Partikels 4 zu einem Referenzpunkt P_{Ref} gewonnen werden, der bekannt ist. Im Ausführungsbeispiel liegt der Referenzpunkt auf der Sohle des Gerinnes 1. Es ist aber ebenso möglich, den Referenzpunkt in die Ebene zu legen, in der sich die Digitalkameras 5 befinden. Der Referenzpunkt kann wahllos gewählt werden.

Mit der mit der Bezugsziffer 6 bezeichneten Steuer-Auswerte-Einrichtung lässt sich der dreidimensionale Abstand a, also ein Abstandsvektor der Position des Partikels 4 zum Referenzpunkt berechnen. Da die Lage des Referenzpunktes P_{Ref} zur Position des Gerinnes 1 und insbesondere zur Position der Sohle des Gerinnes 1 bekannt ist, lässt sich aus dem Ortspunkt des Partikels 4 die Höhe h der Flüssigkeit 2 ermitteln. Es lässt sich ferner die laterale Position des Partikels 4 in der XY-Ebene, also in der Horizontalebene, ermitteln.

Mit einer zweiten stereometrischen Abbildung lässt sich der Abstandsvektor a' des Partikels an der Stelle 4' ermitteln.

Mittels zweier zeitlich hintereinander aufgenommenen dreidimensionalen Abbildungen lassen sich somit zwei Horizontalpositionen 4, 4' ermitteln. Aus dem horizontalen Versatz S und der zwischen den beiden Aufnahmen verstrichenen Zeit lässt sich die Fließgeschwindigkeit des Partikels von der Position 4 zur Position 4' ermitteln. Aus jeder der beiden dreidimensionalen Abbildungen, die jeweils aus drei Digitalabbildungen 7, 7', 7" bestehen, lässt sich darüber hinaus die Y-Position, also die Position des Partikels, also der Abstand 1 des Partikels, vom Rand des Gerinnes 1 bestimmen. Mit Hilfe eines experimentell oder anhand theoretischer Überlegungen ermittelten Strömungsmodells kann mit Hilfe der Höhe der lokalen Strömungsgeschwindigkeit und der lateralen Position des Partikels, also dessen Randabstand eine mittlere Geschwindigkeit vₘ ermittelt werden. Diese muss lediglich mit der Flüssigkeits-Querschnittsfläche A multipliziert werden, um den Volumenstrom Q zu erhalten.

Die Querschnittsfläche A wird mit Hilfe der Höhe h der Flüssigkeitsoberfläche 3 oberhalb der Sohle des Gerinnes 1 bestimmt. Bei der Ermittlung der Querschnittsfläche A wird der bekannte Querschnitt des Gerinnes 1 berücksichtigt.

Die Vorrichtung bzw. das erfindungsgemäße Verfahren zeichnet sich dadurch aus, dass es in einfacher Weise in einen Kanalschacht eingehängt werden kann. Die Höhe, in der die Vorrichtung oberhalb des Flüssigkeitsspiegels 3 angeordnet ist, ist unkritisch. Sämtliche der drei Abbildungseinrichtungen 5 sind im Wesentlichen in dieselbe Richtung orientiert. An dieser Orientierung braucht nichts geändert zu werden. Die Einstellung der optischen Achsen der Abbildungseinrichtungen 5 kann vor dem Einsatz außerhalb des Schachtes erfolgen. In die Steuer-Auswerteeinrichtung muss der Abstand bspw. der Ebene, in der sich die Abbildungseinrichtungen 5 befinden, zur Sohle des Gerinnes 1 eingegeben werden. Es muss ggf. noch der Querschnittsverlauf des Gerinnes 1 eingegeben werden. Mit Hilfe dieser Eingangsdaten kann anhand des zuvor beschriebenen Messverfahrens der Volumenstrom Q bestimmt werden.

### Bezugszeichenliste:

- 1: Gerinne
- 2: Flüssigkeit
- 3: Oberfläche
- 4: schwimmender Partikel
- 4': schwimmender Partikel
- 5: Abbildungseinrichtung
- 6: Steuer-Auswerteeinrichtung
- 7: Abbildung

- A: Querschnittsfläche
- P_{Ref}: Referenzpunkt
- Q: Volumenstrom

- a: 3-D Abstand
- a': Abstandsvektor
- h: vertikale Höhe
- l: Abstand
- v: lokale Geschwindigkeit
- vm: mittlere Geschwindigkeit

## Patentansprüche

1. Verfahren zur Erfassung des Volumenstroms (Q) einer in einem Gerinne (1) fließenden Flüssigkeit (2), wobei zur Bestimmung einer Fließgeschwindigkeit (V) der Flüssigkeit (2) in definierten Zeitabständen Abbildungen der Oberfläche (3) der fließenden Flüssigkeit (2) gemacht werden und daraus der Versatz an der Oberfläche der Flüssigkeit schwimmender Strukturen (4,4') bestimmt wird, und zur Bestimmung der Querschnittsfläche (A) der Flüssigkeit die Vertikalposition (h) der Oberfläche (3) der Flüssigkeit (2) ebenfalls durch Auswerten einer Abbildung bestimmt wird, **dadurch gekennzeichnet, dass** jeweils gleichzeitig von verschiedenen Positionen mehrere Abbildungen der Oberfläche aufgenommen werden und durch Auswerten dieser Abbildungen sowohl die Fließgeschwindigkeit (V) als auch die Vertikalposition (h) der Oberfläche (3) bestimmt werden.

2. Verfahren nach Anspruch 1, **dadurch gekennzeichnet, dass** mit Hilfe der mehreren in definierten Zeitabständen aufgenommenen Abbildungssätze, die jeweils mindestens zwei, bevorzugt drei gleichzeitig aufgenommene Abbildungen der Oberfläche (3) enthalten, der dreidimensionale Abstand (a) der schwimmenden Struktur (4,4') zu einem ortsfesten Referenzpunkt (P_{Ref}) bestimmt wird und daraus eine lokale Oberflächen-Fließgeschwindigkeit (v) der Struktur (4, 4') und deren vertikale Höhe (h) bestimmt werden.

3. Verfahren nach einem der vorhergehenden Ansprüche, **dadurch gekennzeichnet, dass** zur Bestimmung der Querschnittsfläche (A) der Flüssigkeit (2) die Querschnittskontur des Gerinnes (1) mit einbezogen wird.

4. Verfahren nach einem der Ansprüche 2 oder 3, **dadurch gekennzeichnet, dass** aus ein oder mehreren lokalen Oberflächengeschwindigkeiten (v) anhand eines theoretischen oder experimentell ermittelten Strömungsmodells unter Berücksichtigung der Querschnittskontur des Gerinnes (1) und einer aus dem dreidimensionalen Abstand (a) ermittelten Flüssigkeitshöhe (h) eine mittlere Strömungsgeschwindigkeit (vₘ) ermittelt wird, die mit der Flüssigkeitsquerschnittsfläche (A) multipliziert wird.

5. Verfahren nach einem der vorhergehenden Ansprüche, **dadurch gekennzeichnet, dass** die Abbildung mit mindestens zwei, bevorzugt drei gleichzeitig ausgelösten Digitalkameras (5) erfolgt, die an voneinander verschiedenen Positionen oberhalb des Gerinnes (1) angeordnet sind.

6. Vorrichtung zur Durchführung des Verfahrens gemäß einem oder mehreren der vorhergehenden Ansprüche, mit mindestens zwei, bevorzugt drei optischen Abbildungseinrichtungen (5) und einer Steuer-Auswerteeinrichtung (6), wobei die optischen Abbildungseinrichtungen (5) derart relativ zueinander angeordnet sind, dass sie zumindest bereichsweise denselben Oberflächenabschnitt der Flüssigkeit (2) abbilden, und wobei die optischen Abbildungseinrichtungen (5) von der Steuer-Auswerteeinrichtung (6) gleichzeitig ausgelöst werden, wobei die Steuer-Auswerteeinrichtung (6) eine Recheneinheit aufweist, die insbesondere unter Verwendung trigonometrischer Funktionen einen dreidimensionalen Abstand (a) zumindest einer auf der Flüssigkeitsoberfläche schwimmenden Struktur (4, 4') zu einem ortsfesten Referenzpunkt (P_{Ref}) ermittelt und daraus die vertikale Höhe (h) des Flüssigkeitsquerschnitts bestimmt und aus mehreren in definierten Zeitabständen aufgenommenen Abbildungen (7, 7', 7") eine Fließgeschwindigkeit (v) bestimmt und daraus den Volumenstrom (Q) der Flüssigkeit (2) berechnet.

7. Vorrichtung nach Anspruch 6, **dadurch gekennzeichnet, dass** die optischen Abbildungseinrichtungen (5) Digitalkameras sind und die Recheneinrichtung eine Bilderkennungseinrichtung aufweist.

## Claims

1. Method for detecting the volumetric flow rate (Q) of a liquid (2) flowing in a channel (1), images of the surface (3) of the flowing liquid (2) being made at specified intervals in order to determine a flow rate (V) of the liquid (2), and the drift of structures (4, 4') floating on the surface of the liquid being determined therefrom, and, in order to determine the cross-sectional area (A) of the liquid, the vertical position (h) of the surface (3) of the liquid (2) also being determined by analysing an image, **characterised in that** a plurality of images of the surface are produced in each case simultaneously from different positions, and both the flow rate (V) and the vertical position (h) of the surface (3) are determined by analysing said images.

2. Method according to claim 1, **characterised in that**, by means of the plurality of image sets produced at specified intervals, which in each case contain at least two, preferably three images of the surface (3) that are produced simultaneously, the three-dimensional distance (a) of the floating structure (4, 4') from a fixed reference point (P_{Ref}) is determined, and a local surface-flow rate (v) of the structure (4, 4') and the vertical height (h) thereof is determined therefrom.

3. Method according to either of the preceding claims, **characterised in that** the cross-sectional contour of the channel (1) is taken into account in order to determine the cross-sectional area (A) of the liquid (2).

4. Method according to either claim 2 or claim 3, **characterised in that** an average flow speed (vₘ) is determined from one or more local surface speeds (v) on the basis of a theoretically or experimentally determined flow model in consideration of the cross-sectional contour of the channel (1) and of a liquid level (h) determined from the three-dimensional distance (a), which average flow speed is multiplied by the liquid cross-sectional area (A).

5. Method according to any of the preceding claims, **characterised in that** the imaging takes place by means of at least two, preferably three digital cameras (5) that are triggered simultaneously and are arranged in different positions from one another above the channel (1).

6. Device for implementing the method according to one or more of the preceding claims, comprising at least two, preferably three optical imaging apparatuses (5) and a control-analysis apparatus (6), the optical imaging apparatuses (5) being arranged relative to one another such that they image, at least in regions, the same surface portion of the liquid (2), and the optical imaging apparatuses (5) being triggered simultaneously by the control-analysis apparatus (6), the control-analysis apparatus (6) comprising a computing means which, in particular using trigonometric functions, determines a three-dimensional distance (a) of at least one structure (4, 4') floating on the liquid surface from a stationary reference point (P_{Ref}) and determines the vertical height (h) of the liquid cross section therefrom; said means also determines a flow rate (v) from a plurality of images (7, 7', 7") produced at specified intervals, and calculates the volumetric flow rate (Q) of the liquid (2) therefrom.

7. Device according to claim 6, **characterised in that** the optical imaging apparatuses (5) are digital cameras, and the computing apparatus comprises an image-recognition apparatus.

## Revendications

1. Procédé pour déterminer le débit volumétrique (Q) d'un liquide (2) s'écoulant dans un canal (1), dans lequel, pour déterminer une vitesse d'écoulement (V) du liquide (2), des images de la surface (3) du liquide en écoulement (2) sont prises à des intervalles de temps définis à partir desquelles est déterminé le déplacement de structures (4, 4') qui flottent à la surface du liquide, et, pour déterminer l'aire de la section transversale (A) du liquide, la position verticale (h) de la surface (3) du liquide (2) est également déterminée par analyse d'une image, **caractérisé en ce que** plusieurs images de la surface sont prises à chaque fois simultanément depuis des positions différentes et que aussi bien la vitesse d'écoulement (V) que la position verticale (h) de la surface (3) sont déterminées par analyse de ces images.

2. Procédé selon la revendication 1, **caractérisé en ce que** à l'aide de la pluralité de jeux d'images pris à des intervalles de temps définis lesquels contiennent chacun au moins deux, préférentiellement trois images de la surface (3) prises simultanément, est déterminé la distance tridimensionnelle (a) de la structure flottante (4, 4') à un point de référence fixe (P_{Ref}) et à partir de celle-ci sont déterminées une vitesse locale d'écoulement superficiel (v) de la structure (4, 4') et la hauteur verticale (h) de celle-ci.

3. Procédé selon l'une des revendications précédentes, **caractérisé en ce qu'**est pris en compte le contour de la section transversale du canal (1) pour déterminer l'aire de la section transversale (A) du liquide (A).

4. Procédé selon l'une des revendications 2 ou 3, **caractérisé en ce qu'**est déterminée à partir d'une ou plusieurs vitesses locales d'écoulement superficielle (v) en se basant sur un modèle d'écoulement déterminé de manière théorique ou expérimentale et en prenant en compte le contour de la section transversale du canal (1) et une hauteur de liquide (h) déterminée à partir de la distance tridimensionnelle (a), une vitesse moyenne d'écoulement (Vₘ) qui est multipliée par l'aire de la section transversale du liquide (A).

5. Procédé selon l'une des revendications précédentes, **caractérisé en ce que** l'image est réalisée avec au moins deux, préférentiellement trois caméras ou appareils photo numériques déclenchés simultanément et qui sont disposés à des positions mutuellement différentes au-dessus du canal (1).

6. Dispositif pour mettre en oeuvre le procédé selon une ou plusieurs des revendications précédentes, avec au moins deux, préférentiellement trois dispositifs optiques d'acquisition d'images (5) et un dispositif de commande et d'analyse (6), dans lequel les dispositifs optiques d'acquisition d'images (5) sont agencés relativement entre eux de manière à prendre des images au moins partiellement de la même partie superficielle du liquide (2) et dans lequel les dispositifs optiques d'acquisition d'images (5) sont déclenchés simultanément par le dispositif de commande et d'analyse (6), dans lequel le dispositif de commande et d'analyse (6) comprend une unité de calcul laquelle, en utilisant des fonctions trigonométriques, calcule une distance tridimensionnelle (a) d'au moins une structure (4, 4') flottant sur la surface du liquide à un point de référence fixe (P_{Ref}) et détermine à partir de celle-ci la hauteur verticale (h) de la section transversale du liquide et détermine une vitesse d'écoulement (v) à partir de plusieurs images (7, 7', 7") prises à des intervalles de temps définis et calcule à partir de celle-ci le débit volumique (Q) du liquide (2).

7. Dispositif selon la revendication 6, **caractérisé en ce que** les dispositifs optiques d'acquisition d'images (5) sont des caméras ou appareils photos numériques et que l'unité de calcul comprend un dispositif de reconnaissance d'image.
